# EUROPEAN PATENT APPLICATION

(11) **EP 3 299 665 A1**
(43) Date of publication of application: **28.03.2018**
(21) Application number: 16814276.8
(22) Date of filing: 17.06.2016
(51) Int. Cl.: F16H 25/24, F16H 25/22, F16J 15/447

(54) **COOLING LIQUID DISCHARGE DEVICE, BALL SCREW APPARATUS**

(30) Priority: 23.06.2015 JP 2015125784
(71) Applicant: NSK Ltd., Shinagawa-ku Tokyo 141-8560 (JP)
(72) Inventor: YAMAMOTO, Shinpei, Fujisawa-shi Kanagawa 252-0811 (JP); SUZUKI, Seiji, Fujisawa-shi Kanagawa 252-0811 (JP)
(74) Representative: Poskett, Oliver James
(86) International application number: PCT/JP2016/068099
(87) International publication number: WO 2016/208505

(57) **Abstract**

An object is to reduce the load on a driving device for turning a screw shaft (2) in a cooling liquid discharge apparatus (10) for use in a ball screw apparatus (100) used in a machine tool or the like to make the apparatus compact and to prevent an increase in the manufacturing cost. The cooling liquid discharge apparatus (10) according to the invention has a housing (14) that is provided with proximity portions (5d, 6f) that extend radially inwardly to be close to the screw shaft 2 and reservoirs (11, 12, 13) that temporally store cooling liquid (8), which are arranged alternately along the axial direction, and discharge ports (5e, 6e, 6g) through which cooling liquid (8) is discharged from the reservoirs (11, 12, 13) .

## Description

### TECHNICAL FIELD

The present invention relates to a cooling liquid discharge apparatus used to discharge cooling liquid for a screw shaft of ball screw apparatuses used in machine tools, injection molding machines, and semiconductor manufacturing apparatuses. The present invention also relates to a ball screw apparatus provided with such a cooling liquid discharge apparatus.

### BACKGROUND ART

When a ball screw apparatus is driven, frictional heat is generated due to friction between a nut and balls and between balls and a screw shaft. In cases where the ball screw apparatus is provided with a motor used to turn the screw shaft or the nut, heat is also generated by the motor. The heat generated in this way causes the ball screw apparatus to thermally expand, deteriorating high positioning accuracy.

A screw shaft disclosed in Patent Literature 1 has a central bore into which cooling liquid is supplied, and the cooling liquid to which heat has been transferred from the screw shaft is discharged from the screw shaft by a cooling liquid discharge apparatus.

### CITATION LIST

### PATENT LITERATURE

Patent Literature 1: Japanese Patent Application Laid-Open No. H11-19848

### SUMMARY OF INVENTION

### TECHNICAL PROBLEM

According to the invention disclosed in the aforementioned Patent Literature 1, a contact seal is provided to prevent cooling liquid from leaking through a gap between a member that turns with the screw shaft and a member that is fixed to a machine tool or the like. The contact seal causes friction, which leads to a high load on a driving device such as a motor for turning the screw shaft.

To house a contact seal, a cooling liquid discharge apparatus is necessitated to be long along the axial direction, and a large space is required to provide the cooling liquid discharge apparatus.

Moreover, various components such as an annular part that constitutes the contact seal and a coil spring are needed. This leads to an increase in the number of parts and requires efforts of assembly, leading to an increase in the manufacturing cost.

The present invention has been made in view of the above-described problems. An object of the present invention is to provide a compact cooling liquid discharge apparatus which eliminates the need for a contact seal thereby reducing the load on the driving device for turning the screw shaft without an increase in the cost and to provide a ball screw apparatus equipped with such a cooling liquid discharge apparatus.

### SOLUTION TO PROBLEM

To solve the above problems, according to the present invention, there is provided a cooling liquid discharge apparatus for use in a ball screw apparatus including a screw shaft provided with a first ball groove on its outer circumference and a cooling bore extending along its center axis, through which a cooling liquid flows, a nut provided on its inner circumference with a second ball groove opposed to said first ball groove, inside which said screw shaft is inserted, and a plurality of balls provided between said first ball groove and said second ball groove and capable of rolling, said cooling liquid being discharged from a reduced diameter end portion provided at the end of said screw shaft, characterized by comprising:
a bearing externally fitted on said reduced diameter end portion; and
a housing attached to said reduced diameter end portion by said bearing in such a way as to be capable of turning relative to said reduced diameter end portion,
said housing comprising:
   a primary reservoir portion that forms a primary reservoir that stores said cooling liquid discharged from said reduced diameter end portion and from which said cooling liquid is discharged through a first discharge port leading to the outside;
   a first proximity portion that is integral with and located axially on said first ball groove side of said primary reservoir portion, and radially close to said reduced diameter end portion to form a first small gap with said reduced diameter end portion; and
   a secondary reservoir portion that is formed integrally with said first proximity portion and is located axially on said first ball groove side of said first proximity portion, the secondary reservoir portion forming a secondary reservoir into which said cooling liquid overflowing out of said primary reservoir enters through said first small gap and from which said cooling liquid is discharged through a second discharge port leading to the outside.

It is preferred that said housing further have, as its integral portions, a pocket that is radially spaced apart from said reduced diameter end portion and a second proximity portion that is radially close to said reduced diameter end portion to form a second small gap with said reduced diameter end portion, said pocket and said second proximity portion being located axially between said first proximity portion and said secondary reservoir portion with said pocket on said first proximity portion side and said second proximity portion on said secondary reservoir portion side and that said housing be provided with an air hole that passes through it from said pocket to the outside.

It is preferred that the inner diameter of said first proximity portion be larger than the inner diameter of said second proximity portion.

It is preferred that said housing further have a second proximity portion that is integral with and located axially on said first ball groove side of said secondary reservoir portion and radially close to said reduced diameter end portion to form a second small gap with said reduced diameter end portion, and a tertiary reservoir portion that is integral with and located axially on said first ball groove side of said second proximity portion, said tertiary reservoir portion forming a tertiary reservoir into which said cooling liquid overflowing out of said secondary reservoir enters through said second small gap and from which said cooling liquid is discharged through a third discharge port leading to the outside.

It is preferred that said housing further have, as its integral portions, a pocket that is radially spaced apart from said reduced diameter end portion and a third proximity portion that is radially close to said reduced diameter end portion to form a third small gap with said reduced diameter end portion, said pocket and said third proximity portion being located axially between said second proximity portion and said tertiary reservoir portion with said pocket on said second proximity portion side and said third proximity portion on said tertiary reservoir portion side and that said housing be provided with an air hole that passes through it from said pocket to the outside.

It is preferred that the inner diameter of said second proximity portion be larger than the inner diameter of said third proximity portion.

To solve the above problems, according to the present invention, there is provided a ball screw apparatus including a screw shaft provided with a first ball groove on its outer circumference and a cooling bore extending along its center axis, through which a cooling liquid flows, a nut provided on its inner circumference with a second ball groove opposed to said first ball groove, inside which said screw shaft is inserted, and a plurality of balls provided between said first ball groove and said second ball groove and capable of rolling, said cooling liquid being discharged from a reduced diameter end portion provided at the end of said screw shaft, characterized by comprising:
a bearing externally fitted on said reduced diameter end portion; and
a housing attached to said reduced diameter end portion by said bearing in such a way as to be capable of turning relative to said reduced diameter end portion,
said housing comprising a primary reservoir portion that forms a primary reservoir that stores said cooling liquid discharged from said reduced diameter end portion and from which said cooling liquid is discharged through a first discharge port leading to the outside;
a first proximity portion that is integral with and located axially on said first ball groove side of said primary reservoir portion, and radially close to said reduced diameter end portion to form a first small gap with said small diameter end portion; and
a secondary reservoir portion that is integral with and located axially on said first ball groove side of said first proximity portion, the secondary reservoir portion forming a secondary reservoir into which said cooling liquid overflowing out of said primary reservoir enters through said first small gap and from which said cooling liquid is discharged through a second discharge port leading to the outside.

It is preferred that small diameter portions having a diameter smaller than the other portions be provided in the portion of said reduced diameter end portion that is opposed to said primary reservoir portion and in the portion of said reduced diameter end portion that is opposed to said secondary reservoir portion respectively.

It is preferred that said housing further have, as its integral portions, a pocket that is radially spaced apart from said reduced diameter end portion and a second proximity portion that is radially close to said reduced diameter end portion to form a second small gap with said reduced diameter end portion, said pocket and said second proximity portion being located axially between said first proximity portion and said secondary reservoir portion with said pocket on said first proximity portion side and said second proximity portion on said secondary reservoir portion side and that said housing be provided with an air hole that passes through it from said pocket to the outside.

It is preferred that the radial width of said first small gap be larger than the radial width of said second small gap.

It is preferred that said housing further have a second proximity portion that is integral with and located axially on said first ball groove side of said secondary reservoir portion and radially close to said reduced diameter end portion to form a second small gap with said reduced diameter end portion, and a tertiary reservoir portion that is integral with and located axially on said first ball groove side of said second proximity portion, the tertiary reservoir portion forming a tertiary reservoir into which said cooling liquid overflowing out of said secondary reservoir enters through said second small gap and from which said cooling liquid is discharged through a third discharge port leading to the outside.

It is preferred that a small diameter portion having a diameter smaller than the other portions be provided in the portion of the reduced diameter end portion that is opposed to said tertiary reservoir portion.

It is preferred that said housing further have, as its integral portions, a pocket that is radially spaced apart from said reduced diameter end portion and a third proximity portion that is radially close to said reduced diameter end portion to form a third small gap with said reduced diameter end portion, said pocket and said second proximity portion being located axially between said second proximity portion and said tertiary reservoir portion with said pocket on said second proximity portion side and said third proximity portion on said tertiary reservoir portion side, and said housing is provided with an air hole that passes through it from said pocket to the outside.

It is preferred that the radial width of said second small gap be larger than the radial width of said third small gap.

### ADVANTAGEOUS EFFECT OF INVENTION

The present invention eliminates the need for a contact seal, thereby reducing the load on a driving device for turning the screw shaft and can provide a compact cooling liquid discharge apparatus and a ball screw apparatus equipped with such a cooling liquid discharge apparatus without an increase in the cost.

### BRIEF DESCRIPTION OF DRAWINGS

Fig. 1 is a plan view of a ball screw apparatus according to a first embodiment.
Fig. 2 is a cross sectional view of a cooling liquid discharge apparatus for the ball screw apparatus according to the first embodiment.
Fig. 3 is a cross sectional view of a cooling liquid discharge apparatus for a ball screw apparatus according to a second embodiment.
Fig. 4 is a cross sectional view of a cooling liquid discharge apparatus for a ball screw apparatus according to a third embodiment.

### DESCRIPTION OF EMBODIMENTS

In the following, embodiments of the present invention will be described with reference to the drawings.

### First Embodiment

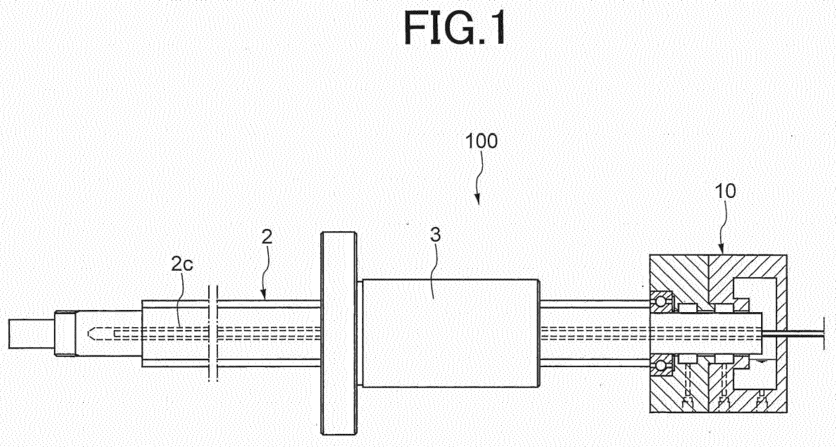

Fig. 1 is a plan view of a ball screw apparatus 100 according to a first embodiment of the present invention. In Fig. 1, a cooling liquid discharge apparatus 10 is illustrated as a cross sectional view.

The ball screw apparatus 100 includes, as basic constituent parts, a cylindrical screw shaft 2 having a helical first ball groove provided on its outer circumference other than both sides, a nut 3 having a hollow cylindrical shape inside which the screw shaft 2 is inserted and having a second ball groove provided on its inner circumferential surface and opposed to the first ball groove of the screw shaft 2, a plurality of balls set between the first ball groove and the second ball groove and capable of rolling, and the cooling liquid discharge apparatus attached on one end of the screw shaft 2.

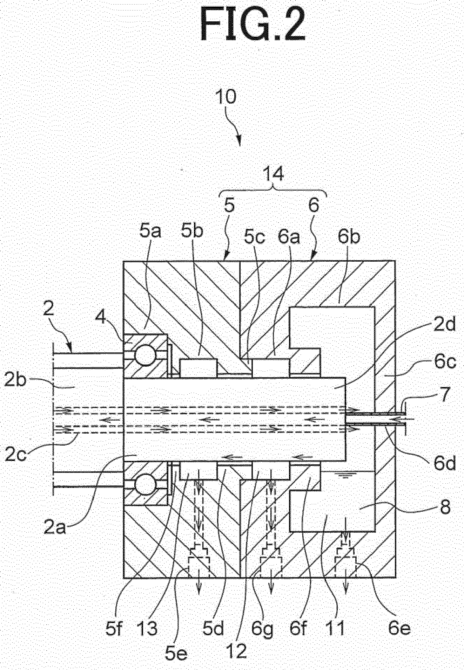

Fig. 2 is a cross sectional view of the cooling liquid discharge apparatus 10 for the ball screw apparatus 100 according to the first embodiment of the present invention. Fig. 2 shows a vertical cross section of the cooling liquid discharge apparatus 10 along its axial direction.

The cooling liquid discharge apparatus 10 includes a bearing 4 having an inner ring fitted on a reduced diameter end portion 2a of the screw shaft 2 and a housing 14, which is mounted on the reduced diameter end portion 2a by the bearing 4 and capable of turning relative to the reduced diameter end portion 2a. The housing 14 is composed of a first member 5 and a second member 6. The first member 5 is fitted on an outer ring of the bearing 4 and covers the base portion of the reduced diameter end portion 2a without being in contact with it, and the second member 6 is joined to the first member 5 and covers the extremity part 2d of the reduced diameter end portion 2a without being in contact with it.

The bearing 4 is a rolling bearing. The reduced diameter end portion 2a of the screw shaft 2 is press-fitted into the inner ring of the bearing 4. The bearing 4 connects the screw shaft 2 and the cooling liquid discharge apparatus 10 in such a way that the screw shaft 2 and the cooling liquid discharge apparatus 10 can turn relative to each other with one end face of the inner ring being in contact with the end face of the screw groove portion 2b of the screw shaft 2. The bearing 4 does not have a seal that seals the gap between the outer ring and the inner ring. This enables a reduction of the load on the ball screw apparatus 100.

The first member 5 has a cylindrical shape with a through bore, through which the reduced diameter end portion 2a of the screw shaft 2 is inserted in a noncontacting manner. The through bore of the first member 5 includes a bearing receiving portion 5a provided at its axial end facing the screw groove portion 2b of the screw shaft 2 and a tertiary reservoir portion 5b disposed closer to the extremity part 2d of the reduced diameter portion 2a than the bearing receiving portion 5a. The tertiary reservoir portion 5b defines a tertiary reservoir 13 having a diameter larger than the portions axially adjacent thereto on both sides. The housing 14 also has a primary reservoir portion 6b and a secondary reservoir portion 6a, which will be described later. The surface of the first member 5 that faces toward the extremity part 2d of the reduced diameter end portion 2a has an annular projection 5c that encircles the screw shaft 2.

The second member 6 is disposed closer to the extremity part 2d of the reduced diameter end portion 2a than the first member 5. The second member 6 has a bottomed cylindrical shape with a space that receives the extremity part 2d of the reduced diameter end portion 2a in a noncontacting manner. The second member 6 includes a secondary reservoir portion 6a that defines a secondary reservoir 12 adjacent to the first member 5. The inner circumference of the secondary reservoir portion 6a extends toward the first member 5, and the annular projection 5c is fitted inside this extended portion. The surface of the second member 6 that faces the first member 5 and the surface of the first member 5 that faces the second member 6 are in surface contact with each other. The portion of the second member 6 around the extremity of the reduced diameter end portion 2a forms a primary reservoir portion 6b having a diameter and axial length larger than the secondary reservoir portion 6a. The primary reservoir portion 6b defines a primary reservoir 11, in which the extremity part 2d of the reduced diameter end portion 2a is inserted. The part of the primary reservoir portion 6b facing away from the first member 5 constitutes the bottom 6c of the second member 6. The bottom 6c has a supply port 6d at a location opposed to the center of the end face of the reduced diameter end portion 2a. A tube 7 for supplying cooling liquid 8 is passed through the supply port 6d. The cooling liquid 8 may be a water-soluble coolant such as a water-soluble solution, water-soluble emulsion, or water-soluble oil.

The screw shaft 2 is provided with a cooling bore 2c, through which cooling liquid 8 flows. The cooling bore 2c is provided at the radial center of the screw shaft 2 and extends from its end face facing the cooling liquid discharge apparatus 10 to a location near its end facing away from the cooling liquid discharge apparatus (see Fig. 1). The tube 7 passing through the supply port 6d formed through the bottom 6c of the second member 6 is inserted into the cooling bore 2c. As shown in Fig. 1, the tube 7 inserted in the cooling bore 2c extends so far that the end of the tube is located at a position near the end of the cooling bore 2c away from the cooling liquid discharge apparatus 10.

The other end of the tube 7 is connected to a cooling liquid circulating apparatus that is not shown in the drawings. The cooling liquid 8 supplied from the cooling liquid circulating apparatus to the tube 7 flows out of the end of the tube 7 into the cooling bore 2c of the screw shaft 2, then flows toward the cooling liquid discharge apparatus 10 while taking heat from the screw shaft 2, and then flows out of the extremity part 2d of the reduced diameter end portion 2a. The above-described forward and backward flow of the cooling liquid 8 in the screw shaft enables size reduction of the ball screw apparatus 100.

The cooling liquid 8 flowing out of the extremity part 2d of the reduced diameter end portion 2a flows through a first discharge port 6e, which is a through hole extending downwardly from the primary reservoir 11, and collected by the cooling liquid circulating apparatus. The cooling liquid 8 thus collected is cooled and supplied to the cooling bore 2c again through the tube 7. In cases where the quantity of cooling liquid 8 flowing out of the screw shaft 2 exceeds the discharge rate through the first discharge port 6e, the cooling liquid 8 is temporally stored in the primary reservoir 11.

The second member 6 has a first proximity portion 6f that is provided integrally with the secondary reservoir portion 6b on the primary reservoir portion 6b side of the secondary reservoir portion 6a and located in the primary reservoir portion 6b. The first proximity portion 6f has an inner circumference close to the outer circumference of the reduced diameter end portion 2a of the screw shaft 2. Thus, an annular gap (first small gap) is left between the first proximity portion 6f and the reduced diameter end portion 2a. When the quantity of cooling liquid 8 flowing out of the screw shaft 2 exceeds the capacity of the primary reservoir 11, the cooling liquid 8 flows from the primary reservoir 11 to the secondary reservoir 12 through the first small gap. The gap between the first proximity portion 6f and the extremity part 2d of the screw shaft 2 prevents the contact of the second member 6 and the screw shaft 2.

The secondary reservoir portion 6a has a second discharge port 6g that extends downwardly in its lower portion. The cooling liquid 8 flowing from the primary reservoir 11 to the secondary reservoir 12 is collected by the cooling liquid circulating apparatus through the second discharge port 6g. In cases where the quantity of cooling liquid 8 flowing out of the screw shaft 2 exceeds the discharge rate through the first discharge port 6e and the second discharge port 6g, the cooling liquid 8 is temporally stored in the secondary reservoir 12.

The inner circumferential portion of the first member 5 that is located on the second member 6 side of the tertiary reservoir portion 5b and the inner circumferential portion of the annular projection 5c constitutes a second proximity portion 5d that is close to the reduced diameter end portion 2a of the screw shaft 2. When the quantity of cooling liquid 8 flowing out of the screw shaft 2 exceeds the capacity of the secondary reservoir 12, the cooling liquid 8 flows into the tertiary reservoir 13 through a gap (second small gap) between the reduced diameter end portion 2a of the screw shaft 2 and the second proximity portion 5d. The gap between the second proximity portion 5d and the extremity part 2d of the screw shaft 2 prevents the contact of the first member 5 and the screw shaft 2.

The tertiary reservoir portion 5b has a third discharge port 5e that extends downwardly in its lower portion. The cooling liquid 8 flowing from the secondary reservoir 12 to the tertiary reservoir 13 is discharged through the third discharge port 5e and collected by the cooling liquid circulating apparatus. In cases where the quantity of cooling liquid 8 flowing out of the screw shaft 2 exceeds the discharge rate through the first discharge port 6e, the second discharge port 6g, and the third discharge port 5e, the cooling liquid 8 is temporally stored in the tertiary reservoir 13.

The above-described cooling liquid discharge apparatus 10 according to the first embodiment can prevent leakage of cooling liquid 8 without the provision of a contact seal. Therefore, it does not need an annular part constituting a contact seal or a coil spring, allowing a reduction in the manufacturing cost. Moreover, a space for housing a contact seal can be eliminated, and therefore the cooling liquid discharge apparatus 10 can be made compact.

The cooling liquid discharge apparatus 10 according to the first embodiment does not have a contact seal that may increase the load on the driving device, such as a motor, for turning the screw shaft 2. Therefore, while having a cooling function using the cooling liquid 8, the ball screw apparatus 100 according to the first embodiment can drive the screw shaft 2 with a small load. Therefore, the energy consumption in driving can be made small.

### Second Embodiment

A ball screw apparatus according to a second embodiment of the present invention will be described. The structure of the ball screw apparatus according to the second embodiment is the same as the above-described ball screw apparatus 100 according to the first embodiment except for the screw shaft 2. In the description of the second embodiment, parts corresponding to those in the above-described ball screw apparatus 100 according to the first embodiment will be denoted by the same reference signs to obviate redundant descriptions.

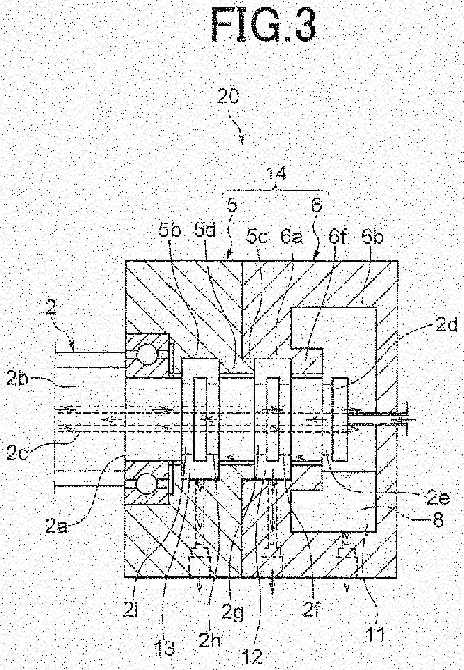

Fig. 3 is a cross sectional view of a cooling liquid discharge apparatus 20 for a ball screw apparatus according to the second embodiment. Fig. 3 shows a vertical cross section of the cooling liquid discharge apparatus 20 along its axial direction.

The ball screw apparatus according to the second embodiment differs from the first embodiment in that the reduced diameter end portion 2a of the screw shaft 2 is provided with small diameter portions 2e, 2f, 2g, 2h, 2i that have a smaller diameter than the other portions.

The small diameter portion 2e is adjacent to a part of the reduced diameter end portion 2a that is opposed to the inner circumference of the first proximity portion 6f, and is located on the side closer in the axial direction to the extremity part 2d of the reduced diameter end portion 2a than the part of the reduced diameter end portion 2a. In other words, the small diameter portion 2e is located adjacent to and on the primary reservoir portion 6b side of the gap (first small gap) between the first proximity portion 6f and the reduced diameter end portion 2a, which connects the primary reservoir portion 6b and the secondary reservoir portion 6a.

The small diameter portion 2f is adjacent to a part of the reduced diameter end portion 2a that is opposed to the inner circumference of the first proximity portion 6f, and is located on the side closer in the axial direction to the screw groove portion 2b of the screw shaft 2 than the part of the reduced diameter end portion 2a. In other word, the small diameter portion 2f is located adjacent to the first small gap on the secondary reservoir portion 6a side.

The small diameter portion 2g is adjacent to a part of the reduced diameter end portion 2a that is opposed to the second proximity portion 5d of the first member 5, and is located on the side closer in the axial direction to the extremity part 2d of the reduced diameter end portion 2a than the part of the reduced diameter end portion 2a . In other words, the small diameter portion 2g is located adjacent to and on the secondary reservoir portion 6a side of the gap (second small gap) between the second proximity portion 5d and the reduced diameter end portion 2a, which connects the secondary reservoir portion 6a and the tertiary reservoir portion 5b.

The small diameter portion 2h is adjacent to a part of the reduced diameter end portion 2a that is opposed to the second proximity portion 5d of the first member 5, and is located on the side closer in the axial direction to the screw groove portion 2b of the screw shaft 2 than the part of the reduced diameter end portion 2a . In other word, the small diameter portion 2h is located adjacent to the second small gap on the tertiary reservoir portion 5b side.

The small diameter portion 2i is provided on the screw groove portion 2b side portion of the reduced diameter end portion 2a that is opposed to the tertiary reservoir portion 5b of the first member 5. In other words, the small diameter portion 2i is located adjacent to the gap (third small gap) between the reduced diameter end portion 2a and the third proximity portion 5f close to the reduced diameter end portion 2a, which is located between the tertiary reservoir portion 5b and the bearing 4, on the tertiary reservoir portion 5b side.

The above-described ball screw apparatus according to the second embodiment provides the advantageous effects same as the above-described first embodiment. Moreover, the provision of the small diameter portions 2e, 2f, 2g, 2h, 2i can reduce the propagation of the cooling liquid 8 from the primary reservoir 11 toward the bearing 4, thereby further preventing the leakage of the cooling liquid 8.

### Third Embodiment

Next, a ball screw apparatus according to a third embodiment of the present invention will be described. The structure of the ball screw apparatus according to the third embodiment is the same as the above-described ball screw apparatus 100 according to the first embodiment except for the cooling liquid discharge apparatus 30. In the description of the third embodiment, parts corresponding to those in the above-described ball screw apparatus 100 according to the first embodiment will be denoted by the same reference signs to obviate redundant descriptions.

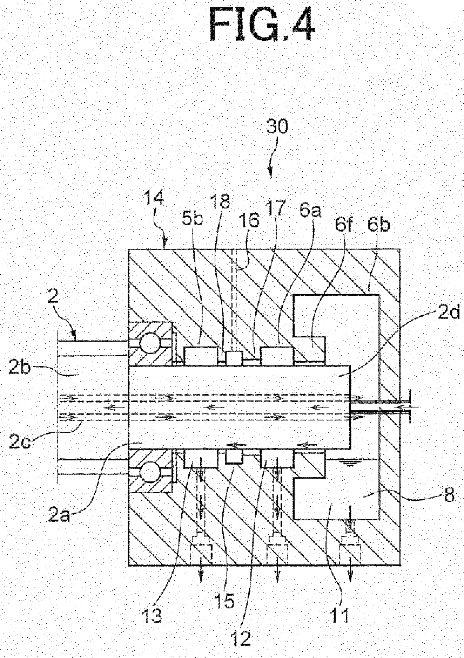

Fig. 4 is a cross sectional view of a cooling liquid discharge apparatus 30 for a ball screw apparatus according to the third embodiment. Fig. 4 shows a vertical cross section of the cooling liquid discharge apparatus 30 along its axial direction.

The cooling liquid discharge apparatus 30 for a ball screw apparatus according to the third embodiment differs from the above-described cooling liquid discharge apparatus 10 according to the first embodiment in that it is provided with a pocket 15 that forms an air pocket and an air hole 16 that extends upwardly from the pocket 15 therethrough. The cooling liquid discharge apparatus 30 is also different from the first embodiment in that it is provided with a housing 14 as an integration of the first member 5 and the second member 6 in the first embodiment.

The housing 14 has a second proximity portion 17 adjacent to the pocket 15 on the extremity part 2d side of the reduced diameter end portion 2a and a third proximity portion 18 adjacent to the pocket 15 on the screw groove 2b side. The inner diameter of the second proximity portion 17 is larger than the inner diameter of the third proximity portion 18. Therefore, the radial dimension of the gap (second small gap) between the second proximity portion 17 and the reduced dimeter end portion 2a is larger than the radial dimension of the gap (third small gap) between the third proximity portion 18 and the reduced dimeter end portion 2a.

The above-described ball screw apparatus according to the third embodiment provides the advantageous effects same as the above-described first embodiment. Moreover, the air pocket provides air seal that can reduce propagation of the cooling liquid 8 from the primary reservoir 11 toward the bearing 4, thereby further preventing the leakage of the cooling liquid 8. In cases where a water-soluble coolant is used as the cooling liquid 8, the entrance of the water-soluble coolant into the bearing 4 is apt to cause rust of the bearing 4. In this embodiment, the entrance of the cooling liquid 8 into the bearing can be prevented by blowing air through the air hole 16.

While specific embodiments have been described in detail for the purpose of facilitating the understanding of the present invention, the present invention is not limited to them, but various modifications and improvements may be made to them.

For example, the number of the reservoir is not limited to three, but it may be two, four or more. The number of the discharge ports is also not limited to three, but it may be two, four or more in conformity with the number of the reservoirs.

The location of the air pocket is not limited to the location between the secondary reservoir portion 6a and the tertiary reservoir portion 5b, but it may be located between any two adjacent reservoir portions, or a plurality of air pockets may be provided. The apparatus according to the above-described first or second embodiment may also be provided with an air pocket.

A desired number of small diameter portions may be provided on the reduced diameter end portion 2a at any desired locations opposed to reservoir portions. An air pocket (s) may be provided in addition to the small diameter portions.

As above, it is possible to eliminate the need for a contact seal thereby reducing the load on the driving device for turning the screw shaft and to provide a compact cooling liquid discharge apparatus and a ball screw apparatus equipped with such a cooling liquid discharge apparatus without an increase in the cost.

### REFERENCE SIGNS LIST

100: ball screw apparatus
2: screw shaft
2a: reduced diameter end portion
2b: screw groove portion
2c: cooling bore
2d: extremity part
2e, 2f, 2g, 2h, 2i: small diameter portion
3: nut
4: bearing
5: first member
5a: bearing receiving portion
5b: tertiary reservoir portion
5c: annular projection
5d: second proximity portion
5e: third discharge port
5f: third proximity portion
6: second member
6a: secondary reservoir portion
6b: primary reservoir portion
6c: bottom
6d: supply port
6e: first discharge port
6f: first proximity portion
6g: second discharge port
7: tube
8: cooling liquid
10, 20, 30: cooling liquid discharge apparatus
11: primary reservoir
12: secondary reservoir
13: tertiary reservoir
14: housing
15: pocket
16: air hole
17: second proximity portion
18: third proximity portion

## Claims

1. A cooling liquid discharge apparatus for use in a ball screw apparatus including a screw shaft provided with a first ball groove on its outer circumference and a cooling bore extending along its center axis, through which a cooling liquid flows, a nut provided on its inner circumference with a second ball groove opposed to said first ball groove, inside which said screw shaft is inserted, and a plurality of balls provided between said first ball groove and said second ball groove and capable of rolling, said cooling liquid being discharged from a reduced diameter end portion provided at the end of said screw shaft, **characterized by** comprising:
a bearing externally fitted on said reduced diameter end portion; and
a housing attached to said reduced diameter end portion by said bearing in such a way as to be capable of turning relative to said reduced diameter end portion,
said housing comprising:
a primary reservoir portion that forms a primary reservoir that stores said cooling liquid discharged from said reduced diameter end portion and from which said cooling liquid is discharged through a first discharge port leading to the outside;
a first proximity portion that is integral with and located axially on said first ball groove side of said primary reservoir portion, and radially close to said reduced diameter end portion to form a first small gap with said reduced diameter end portion; and
a secondary reservoir portion that is formed integrally with said first proximity portion and is located axially on said first ball groove side of said first proximity portion, the secondary reservoir portion forming a secondary reservoir into which said cooling liquid overflowing out of said primary reservoir enters through said first small gap and from which said cooling liquid is discharged through a second discharge port leading to the outside.

2. A cooling liquid discharge apparatus according to claim 1, **characterized in that** said housing further has, as its integral portions, a pocket that is radially spaced apart from said reduced diameter end portion and a second proximity portion that is radially close to said reduced diameter end portion to form a second small gap with said reduced diameter end portion, said pocket and said second proximity portion being located axially between said first proximity portion and said secondary reservoir portion with said pocket on said first proximity portion side and said second proximity portion on said secondary reservoir portion side, and said housing is provided with an air hole that passes through it from said pocket to the outside.

3. A cooling liquid discharge apparatus according to claim 2, **characterized in that** the inner diameter of said first proximity portion is larger than the inner diameter of said second proximity portion.

4. A cooling liquid discharge apparatus according to claim 1, **characterized in that** said housing further has a second proximity portion that is integral with and located axially on said first ball groove side of said secondary reservoir portion and radially close to said reduced diameter end portion to form a second small gap with said reduced diameter end portion, and a tertiary reservoir portion that is integral with and located axially on said first ball groove side of said second proximity portion, the tertiary reservoir portion forming a tertiary reservoir into which said cooling liquid overflowing out of said secondary reservoir enters through said second small gap and from which said cooling liquid is discharged through a third discharge port leading to the outside.

5. A cooling liquid discharge apparatus according to claim 4, **characterized in that** said housing further has, as its integral portions, a pocket that is radially spaced apart from said reduced diameter end portion and a third proximity portion that is radially close to said reduced diameter end portion to form a third small gap with said reduced diameter end portion, said pocket and said third proximity portion being located axially between said second proximity portion and said tertiary reservoir portion with said pocket on said second proximity portion side and said third proximity portion on said tertiary reservoir portion side, and said housing is provided with an air hole that passes through it from said pocket to the outside.

6. A cooling liquid discharge apparatus according to claim 5, **characterized in that** the inner diameter of said second proximity portion is larger than the inner diameter of said third proximity portion.

7. A ball screw apparatus including a screw shaft provided with a first ball groove on its outer circumference and a cooling bore extending along its center axis, through which a cooling liquid flows, a nut provided on its inner circumference with a second ball groove opposed to said first ball groove, inside which said screw shaft is inserted, and a plurality of balls provided between said first ball groove and said second ball groove and capable of rolling, said cooling liquid being discharged from a reduced diameter end portion provided at the end of said screw shaft, **characterized by** comprising:
a bearing externally fitted on said reduced diameter end portion; and
a housing attached to said reduced diameter end portion by said bearing in such a way as to be capable of turning relative to said reduced diameter end portion,
said housing comprising:
a primary reservoir portion that forms a primary reservoir that stores said cooling liquid discharged from said reduced diameter end portion and from which said cooling liquid is discharged through a first discharge port leading to the outside;
a first proximity portion that is integral with and located axially on said first ball groove side of said primary reservoir portion, and radially close to said reduced diameter end portion to form a first small gap with said small diameter end portion; and
a secondary reservoir portion that is integral with and located axially on said first ball groove side of said first proximity portion, the secondary reservoir portion forming a secondary reservoir into which said cooling liquid overflowing out of said primary reservoir enters through said first small gap and from which said cooling liquid is discharged through a second discharge port leading to the outside.

8. A ball screw apparatus according to claim 7, **characterized in that** small diameter portions having a diameter smaller than the other portions are provided in the portion of said reduced diameter end portion that is opposed to said primary reservoir portion and in the portion of said reduced diameter end portion that is opposed to said secondary reservoir portion respectively.

9. A ball screw apparatus according to claim 7 or 8, **characterized in that** said housing further has, as its integral portions, a pocket that is radially spaced apart from said reduced diameter end portion and a second proximity portion that is radially close to said reduced diameter end portion to form a second small gap with said reduced diameter end portion, said pocket and said second proximity portion being located axially between said first proximity portion and said secondary reservoir portion with said pocket on said first proximity portion side and said second proximity portion on said secondary reservoir portion side, and said housing is provided with an air hole that passes through it from said pocket to the outside.

10. A ball screw apparatus according to claim 9, **characterized in that** the radial width of said first small gap is larger than the radial width of said second small gap.

11. A ball screw apparatus according to claim 7 or 8, **characterized in that** said housing further has a second proximity portion that is integral with and located axially on said first ball groove side of said secondary reservoir portion and radially close to said reduced diameter end portion to form a second small gap with said reduced diameter end portion, and a tertiary reservoir portion that is integral with and located axially on said first ball groove side of said second proximity portion, the tertiary reservoir portion forming a tertiary reservoir into which said cooling liquid overflowing out of said secondary reservoir enters through said second small gap and from which said cooling liquid is discharged through a third discharge port leading to the outside.

12. A ball screw apparatus according to claim 11, **characterized in that** a small diameter portion having a diameter smaller than the other portions is provided in the portion of the reduced diameter end portion that is opposed to said tertiary reservoir portion.

13. A ball screw apparatus according to claim 11 or 12 **characterized in that** said housing further has, as its integral portions, a pocket that is radially spaced apart from said reduced diameter end portion and a third proximity portion that is radially close to said reduced diameter end portion to form a third small gap with said reduced diameter end portion, said pocket and said second proximity portion being located axially between said second proximity portion and said tertiary reservoir portion with said pocket on said second proximity portion side and said third proximity portion on said tertiary reservoir portion side, and said housing is provided with an air hole that passes through it from said pocket to the outside.

14. A ball screw apparatus according to claim 13, **characterized in that** the radial width of said second small gap is larger than the radial width of said third small gap.
